(19) **Europäisches Patentamt / European Patent Office / Office européen des brevets**

(11) **EP 3 779 972 B1**

(12) **EUROPEAN PATENT SPECIFICATION**

(45) Date of publication and mention
of the grant of the patent:
**11.09.2024 Bulletin 2024/37**

(21) Application number: **19782046.7**

(22) Date of filing: **28.01.2019**

(51) International Patent Classification (IPC):
*G10L 15/26* (2006.01)   *G10L 15/22* (2006.01)
*G06F 3/16* (2006.01)

(52) Cooperative Patent Classification (CPC):
**G10L 15/22; G06F 3/167**

(86) International application number:
**PCT/CN2019/073417**

(87) International publication number:
**WO 2019/192250 (10.10.2019 Gazette 2019/41)**

(54) **VOICE WAKE-UP METHOD AND APPARATUS**

STIMMAUFWECKVERFAHREN UND -VORRICHTUNG

PROCÉDÉ ET APPAREIL DE RÉVEIL VOCAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2018 CN 201810298845**

(43) Date of publication of application:
**17.02.2021 Bulletin 2021/07**

(73) Proprietor: **IFLYTEK CO., LTD.**
**Hefei, Anhui 230088 (CN)**

(72) Inventors:
• **SONG, Yanan**
**Hefei, Anhui 230088 (CN)**
• **PAN, Jia**
**Hefei, Anhui 230088 (CN)**
• **WU, Guobing**
**Hefei, Anhui 230088 (CN)**

(74) Representative: **Dilg, Haeusler, Schindelmann Patentanwaltsgesellschaft mbH**
**Leonrodstraße 58**
**80636 München (DE)**

(56) References cited:
EP-A1- 3 092 555   EP-B1- 3 485 489
WO-A1-2015/084425   CN-A- 105 206 271
CN-A- 105 654 943   CN-A- 105 793 921
CN-A- 106 898 352   CN-A- 107 564 518
CN-A- 107 564 518   CN-A- 108 538 298
US-A1- 2017 169 817   US-A1- 2018 025 733

**Description**

**CROSS-REFERENCE TO RELATED APPLICATION**

The present application claims priority to Chinese Application No. 2018102988451 filed on April 4, 2018, entitled "Voice Wake-Up Method and Apparatus".

**FIELD OF TECHNOLOGY**

The embodiments of the present disclosure relate to the technical field of computer application, and more particularly, to a voice wake-up method and an apparatus.

**BACKGROUND**

With the gradual development of voice interaction technology, more and more smart terminals possess a voice wake-up function, that is, the purpose of waking up the smart terminals is achieved by understanding the voice information of users' voice data. A voice wake-up method has been provided in the related art, in which a wake-up word is preset by a user, and after receiving a voice signal, the terminal determines whether the voice signal matches the wake-up word. If it matches, the smart device in a sleep state is woken up; if it does not match, no wake-up is performed. Wherein, the interaction process starts right after the smart device is woken up. If an interruption occurs in the interaction process, the smart device needs to be re-woken up and the interaction process is restarted from the beginning.
If, after this interruption, the user wishes to resume the same interaction link as before the interruption, it will bring increased interaction costs and affected user interaction experience since the smart device needs to be re-woken up and the interaction process is restarted from the beginning and the previous interaction link has been performed before the interruption. The application EP3092555A1 (WO2015/106134A1) discloses techniques for determining one or more contextual audio triggers usable to initiate an interaction with a computing device, each one of the one or more contextual triggers being associated with a respective operation of the computing device. The application WO2015/084425A1 discloses techniques using so-called hotwords to wake a mobile computing device from a sleep or stand-by state.

**SUMMARY**

The invention provides a voice wake-up method for a device according to claim 1, voice wake-up apparatuses according to claims 7, 13 and a non-transitory computer readable storage medium according to claim 14. Preferable aspects are set forth in the dependent claims.

**BRIEF DESCRIPTION OF THE DRAWINGS**

In order to make the embodiments of the present disclosure or the technical solutions in the prior art clearer, drawings needed in the embodiments or the description of the prior art is briefly introduced as follows. Obviously, the drawings in the following description are only some of the embodiments of the present disclosure. For those of ordinary skill in the art, other drawings can be obtained based on these drawings without paying any creative effort.

Fig. 1 is a schematic flowchart of a voice wake-up method provided by an embodiment of the present disclosure; and

Fig. 2 is a schematic flowchart of a voice wake-up method provided by another embodiment of the present disclosure; and

Fig. 3 is a schematic flowchart of a voice wake-up method provided by yet still another embodiment of the present disclosure; and

Fig. 4 is a schematic structural diagram of a wake-up network provided by an embodiment of the disclosure; and

Fig. 5 is a schematic structural diagram of a voice wake-up apparatus provided by an embodiment of the disclosure; and

Fig. 6 is a schematic structural diagram of a voice wake-up device provided by an embodiment of the disclosure.

DETAILED DESCRIPTION

In order to make the objectives, technical solutions and advantages of the embodiments of the present disclosure clearer, the technical solutions in the embodiments of the present disclosure will be described clearly and completely in conjunction with the accompanying drawings in the embodiments of the present disclosure. Obviously, the embodiments described below are part of the embodiments of the present disclosure, rather than all of the embodiments. Based on the embodiments in the present disclosure, all other embodiments obtained by those of ordinary skill in the art without creative effort shall fall within the protection scope of the present disclosure.

Voice wake-up is performed by understanding a user's voice signal, so as to realize the purpose of waking up a smart device. The wake-up process in related technologies can be seen in the following example: taking the smart device as a smart speaker with a wake-up word of "Echo Echo" preset by a user as examples, if the smart speaker detects that the user has input a voice signal of "Echo Echo" (that is, a voice signal may have no semantics, the voice signal is only configured to wake up the smart speaker), it can start to interact with the user. The specific interaction process can be as follows:

User: Echo Echo.

Smart speaker: What can I help you with?

User: Have a song for me.

Smart speaker: Okay, do you have a favorite singer or song?

User: I want to hear Jay Chou.

Smart speaker: Which song by Jay Chou would you like? ...

After the smart speaker asks "Which song by Jay Chou would you like?", the smart speaker may randomly play a Jay Chou's song and then enters a sleep state if the smart speaker does not get a desired response to the question from the user within a period of time. There are two situations in which a desired response cannot be obtained: no response is received within a preset period of time, or a response unrelated to the question is received within a preset period of time (i.e., like cross questions and crooked answers). After the smart speaker enters the sleep state, the user needs to say "Echo Echo" and restart the interaction process if it is needed to wake up the smart speaker again. At this point, if the purpose of the user to wake up the smart speaker is to listen to Jay Chou's songs, the following interaction process needs to be repeated:

User: Echo Echo.

Smart speaker: What can I help you with?

User: Have a song for me.

Smart speaker: Okay, do you have a favorite singer or song?

User: I want to hear Jay Chou.

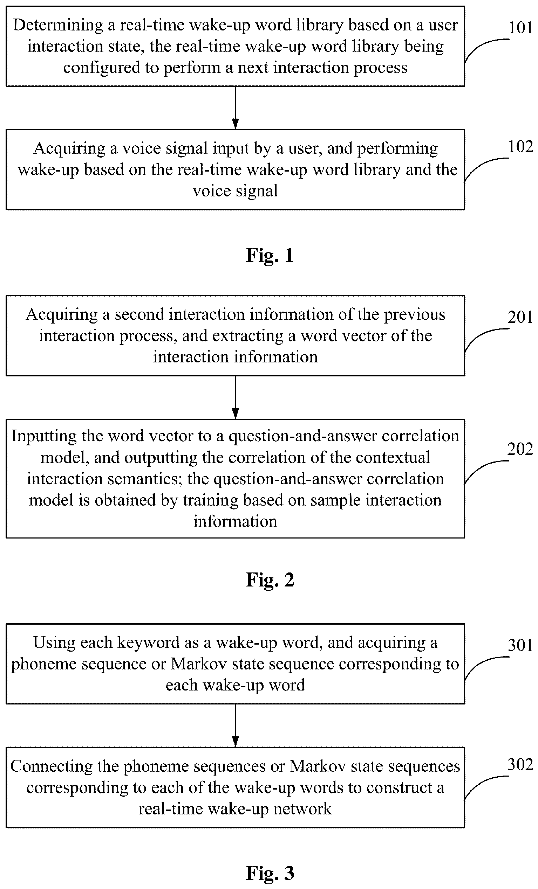

It can be seen that the above interaction process is repeated. In view of the above situation, one of the embodiments of the present disclosure provides a voice wake-up method which can be performed by a smart device, and the smart device can be a wearable device, an on-board equipment, a mobile device, a PC, a smart household appliance, or the like, which is not specifically defined in the embodiments of the present disclosure. The method can be applied to various interaction scenarios, such as home household usage scenarios, customer service interaction scenarios, and ticket purchase scenarios, which are not specifically defined in the embodiments of the present disclosure either. As shown in Fig. 1, the method includes: 101. determining a real-time wake-up word library based on a user interaction state, the real-time wake-up word library being configured to perform a next interaction process; and 102. acquiring a voice signal input by a user, and performing wake-up based on the real-time wake-up word library and the voice signal.

Before performing the step 101, the smart device had ever been woken up by the user and initiated an interaction process with the user, that is, the previous interaction process. In the previous interaction process, previous interaction process the smart device can be woken up through a defined wake-up word library. The defined wake-up word library can be used as an original wake-up word library. The original wake-up word library can be automatically set when the smart device leaves a factory, or can be generated in the following ways: firstly, the smart device receives a wake-up word text or voice signal input by the user; wherein, the wake-up word text can be pre-defined by the user and confirmed by the user, and the voice signal can be a semantic voice or a non-semantic one.

If a wake-up word text is received by the smart device, the wake-up word text is segmented; a phoneme or Markov state-level sequence of the wake-up word is determined according to the mapping list between each segmented word and phoneme; the wake-up word library generation program is called to generate an original wake-up word library based on phoneme or state-level sequence; after determining a new wake-up word, the user may wake up the smart device by applying the original wake-up word library.

If a voice signal is received by the smart device, the acoustic characteristics, such as filter bank features of the voice signal may be extracted first; a phoneme or state-level decoding word library is constructed, an acoustic model is called to decode the acoustic characteristics by means of the phoneme or state-level decoding word library, and the phoneme or state-level sequence of the wake-up word is obtained; the wake-up word library generation program is called to generate an original wake-up word library based on phoneme or state-level sequence.

The smart device may not receive the desired response from the user in a certain link of the previous interaction process, and thus enter a sleep state. After the smart device enters the sleep state, the user interaction state can be determined. The user interaction state can be divided into two types, the first type is that the user wants to continue the previous interaction process before sleep in the next interaction process; the second type is that the user wants to start a new interaction process in the next interaction process. After the real-time wake-up word library is determined, the voice signal input by the user can be obtained, and wake-up is performed based on the real-time wake-up word library and voice signal.

For the method provided by the embodiments of the present disclosure, a real-time wake-up word library is determined based on a user interaction state, a voice signal input by the user is acquired, and wake-up is performed based on the real-time wake-up word library and the voice signal. After an interruption of the previous interaction process, wake-up is performed based on a real-time wake-up word library, thus, it can provide users with an unperceivable experience with respect to sleep when wake-up is re-performed, so that the user can directly continue the interaction scenarios prior to sleep, without repeating the interaction process that has been performed previously. Therefore, the interaction cost can be reduced and the user experience can be improved.

On the basis of the content of the foregoing embodiments, an embodiment of the present disclosure provides a method for determining real-time wake-up word library based on user interaction state, including: when the user interaction state is to continue the previous interaction process before sleep, acquiring keywords in a first interaction information of the previous interaction process, and adding the keywords to an original wake-up word library to obtain the real-time wake-up word library; when the user interaction state is to restart the interaction process, using an original wake-up word library as the real-time wake-up word library.

Specifically, if the user interaction state is to continue the previous interaction process before sleep, keywords in a first interaction information of the previous interaction process are acquired according to the keyword information rules. When keywords in the first interaction information of the previous interaction process are acquired, the first interaction information may be interaction information involved in various interaction links in the previous interaction process, or information acquired in the previous interaction process as needed by the user, which is not specifically defined in the embodiments of the present disclosure. The keywords may be nouns and verbs involved in various interaction links in the interaction process before the sleep process, or may be nouns searched based on the questions asked by the user in the interaction link, which is not specifically defined in the embodiments of the present disclosure, either. The real-time wake-up word library can be obtained by adding the keywords to the original wake-up word library. After the voice signal input by the user is acquired, the wake-up can be performed based on the real-time wake-up word library and voice signal.

Taking the smart device as a smart speaker as an example, the previous interaction process before sleep can be referred to in the foregoing examples. Accordingly, the keywords may be nouns and verbs involved in various interaction links in the interaction process, such as "listen", "Jay Chou", and "song", and may also be nouns searched based on the questions asked by the user in the interaction link, such as the song titles "Simple Love" and "Tornado" in the corresponding music library of Jay Chou. The real-time wake-up word library can be determined by the keywords above. When the user inputs a voice signal, such as "Jay Chou", the voice signal can be recognized by the real-time wake-up word library, so that based on the recognition result, the smart device may be woken up to continue with the previous interaction process before sleep, and it is determined that the next operation is to play Jay Chou's songs instead of introducing Jay Chou's relevant resume. When the real-time wake-up word library is constructed, the nouns searched according to the questions asked by the user in the interaction link, such as the song title "Simple Love", are also used as keywords and thus, when the voice signal input by the user is "play Simple Love", the smart device may also be woken up to play the song "Simple Love". In addition, when the voice signal input by the user is "listen to Simple Love" or "Simple Love", the song "Simple Love" may be played as well.

On the basis of the content of the foregoing embodiments, as an optional embodiment, the manner of "acquiring keywords in the first interaction information of the previous interaction process according to the keyword information rules is not specifically defined in the embodiments of the present disclosure, including but not limited to: acquiring keywords in the first interaction information of the previous interaction process according to part of speech and/or sentence components.

Wherein, the keyword information rules may be a selection rule for selecting keywords from the first interaction information. Specifically, the keyword information rule can be "selecting according to part of speech and/or sentence components", such as selecting nouns or adjectives according to part of speech, and/or selecting predicates or objects according to sentence components. The content of the keyword information rules is not specifically defined in the embodiments of the present disclosure.

On the basis of the content of the foregoing embodiments, as an optional embodiment, the first interaction information includes any one of the following three types of information: user's instruction information, machine reply information, and query information. Wherein, the user's instruction information means the instructions issued or questions asked by the user when interacting with the smart device, the machine reply information means the information that the smart device responds to the instructions issued or questions asked by the user, and the query information means the information queried by the smart device as needed by the user. After the keywords in the interaction information according to the keyword information rules are acquired a wake-up word library can be constructed based on the keywords. It should be noted that the process of acquiring keywords can be performed in advance, thereby improving the speed of updating the original wake-up word library.

It should be noted that before keywords are extracted, a semantic understanding model may be trained firstly based on the interaction scenarios to extract the summary information of the interaction information, and then the keywords are extracted from the summary information based on the keyword information rules, which is not specifically defined in the embodiments of the present disclosure.

After the acquisition of the keywords in the first interaction information, the keywords can also be synonymously expanded, so as to determine the real-time wake-up word library based on the keywords and the keywords of synonymous expansion. At this time, the real-time wake-up word library contains the content of the expanded keywords in addition to the content of the keywords in the first interaction information, so that when a subsequent user inputs a voice signal semantically related to the first interaction information before sleep, the voice signal can also be recognized with wake-up being performed subsequently. Therefore, the flexibility of the wake-up method is enhanced.

On the basis of the content of the foregoing embodiments, before the step 101 is performed, as an optional embodiment, an embodiment of the present disclosure further provides a method for determining a user interaction state, including: determining a user interaction state based on a user state feature and an interaction logic feature.

Where, the user state feature is configured to represent a user state during interaction, and the interaction logic feature is configured to represent an interaction logic during interaction. Specifically, the user state feature can be configured to describe the response time at which the user interacts with the smart device, and the state of the user when the smart device acquires the user response; the interaction logic feature can be configured to describe whether the semantics of the voice signal received by the smart device before sleep is relevant to the question.

On the basis of the content of the foregoing embodiments, as an optional embodiment, the manner of "determining the user interaction state based on the user state feature and the interaction logic feature" is not specifically defined in the embodiments of the present disclosure, including but not limited to the following two manners: inputting the user state feature and the interaction logic feature to an interaction state prediction model, and outputting the user interaction state; or, generalizing the user state feature and the interaction logic feature, and determining the user interaction state according to a generalization result.

For the first manner described above, the interaction state prediction model can be obtained after the sample feature of the user state and the sample feature of the interaction logic are trained. Specifically, the user state features and the interaction logic features of the user in various interaction states can be respectively determined in advance. That is, when the user wants to continue the interaction process before sleep, the user state feature and the interaction logic feature at this time are determined. When the user wants to start a new interaction process, the user state feature and the interaction logic feature at this time are determined. The user state feature and interaction logic feature of the user in various interaction states are used as sample features, the sample features are used as the input of an initial model, and the user interaction state is used as the output, so that the initial model may be trained to obtain the interaction state prediction model. After the interaction state prediction model is obtained through training, the user interaction state can be determined through the interaction state prediction model obtained via training.

For the second manner described above, since the user state feature and the interaction logic feature may be data of different dimensions, the user state feature and the interaction logic feature may be firstly generalized into data of the same dimension; the generalized user state feature and interaction logic feature are then weighted and summed. If the sum result is greater than the preset threshold, it means that the interaction process before sleep has been completed, and the user wants to start a new interaction process next time. If the sum result is not greater than the preset threshold, it means that the interaction process before sleep has not been completed, and the user wants to continue the interaction process performed before sleep next time. Wherein, the preset threshold can be set as needed, and is not specifically defined in the embodiments of the present disclosure.

On the basis of the content of the foregoing embodiments, as an optional embodiment, both the user state feature and interaction logic feature may contain a variety of information; wherein, the user state feature includes at least any one of the following five types of information: user response duration, user distance, the state of a user's body, the state of a user's face , and user identity; the interaction logic feature includes at least any one of the following two types of information: integrity of interaction logic and correlation of contextual interaction semantics.

Specifically, the user response duration may be a time interval from the last interaction in the previous interaction process before the smart device sleeps (the smart device goes to sleep right after the last interaction) to the time when the user voice signal is received. Certainly, the user response duration may also be the time interval from when the smart device enters sleep to when the user voice signal is received, or it may be the time interval from the sleep time and the current time as well, which is not specifically defined in the embodiments of the present disclosure. Wherein, the longer the user response duration, the more likely the voice signal input by the user (i.e., the response after sleep) unrelated to the previous interaction process before sleep.

The user distance means a physical distance between the user and the smart device. Wherein, the greater the user distance, the further the user is separated from the smart device, and at this time, the more likely the voice signal input by the user unrelated to the previous interaction process before sleep. The user distance may be estimated according to the degree of attenuation of the sound to the smart device, or may be estimated by means of infrared detection, which is not specifically defined in the embodiments of the present disclosure.

The state of user's body represents the body movement of the user. When the user makes a specific body movement toward the smart device, such as a preset gesture movement, it means that the voice signal input by the user is more likely to be related to the interaction process before sleep. The state of user's body can be detected by a camera on the smart device, which is not specifically defined in the embodiments of the present disclosure.

The state of user's face may include facial expression and/or facial orientation, which is not specifically defined in the embodiments of the present disclosure. Taking the state of user's face including facial orientation as an example, the facial orientation represents an angle at which the user's face is imaged. Wherein, the closer the user facial orientation is to the orientation of the smart device, the more likely the voice signal input by the user is related to the interaction process before sleep. The user facial orientation can be determined by the camera loaded on the smart device and face recognition technology, which is not specifically defined in the embodiments of the present disclosure.

The user identity can be used to determine whether the user participating in the previous interaction process of the smart device before sleep is the same as the user participating in the next interaction process. If the user participating in the interaction in the two interaction processes are the same person, it means that the voice signal input by the user is more likely to be related to the previous interaction process before sleep. The user identity can be determined by means of face recognition, which is not specifically defined in the embodiments of the present disclosure.

The integrity of interaction logic indicates whether the user responds to the question asked by the smart device before the smart device enters sleep. The integrity of interaction logic is positively correlated to the degree of user response to the question, the higher the degree of user response to the question, the higher the degree of integrity of interaction logic.

The correlation of contextual interaction semantics indicates whether the response given by the user is related to the question asked by the smart device before the smart device goes to sleep. Wherein, the more relevant the response made by the user is to the question, the greater the correlation of contextual interaction semantics.

It should be noted that, as can be seen from the foregoing embodiments, when the user interaction state is determined, it can be determined by a weighted summation method, or an interaction state prediction model. If the user interaction state is determined by the interaction state prediction model, one or more of the above seven types of information may be input to the interaction state prediction model, thereby outputting the user interaction state. If the user interaction state is determined by the weighted summation method, each information may be weighted and summed since both the user state feature and the interaction logic feature may include one or more types of information. Taking the user state feature including the above three types of information, and the interaction logic feature including the above two types of information as an example, the different dimensions of information above are generalized, and the generalized data are then weighted and summed to obtain the summation result. The specific process is shown in the following formula:

$$Y = a_1 * T + a_2 * L + a_3 * alpha + a_4 * R + a_5 * S + a_6$$

In the formula above, Y represents the summation result. T represents the segmentally generalized user response duration, L represents the segmentally generalized user distance, alpha represents the segmentally generalized user facial orientation, R represents the integrity of interaction logic, S represents the correlation of the contextual interaction semantics, $a_1$, $a_2$, ..., $a_5$ represent their respective weights, and $a_6$ is a constant weighting parameter.

On the basis of the content of the foregoing embodiments, as an optional embodiment, an embodiment of the present disclosure provides a method for determining the correlation of the contextual interaction semantics. As shown in Fig. 2, the method includes: 201, acquiring a second interaction information of the previous interaction process, and extracting a word vector of the interaction information; and 202, inputting the word vector to a question-and-answer correlation model, and outputting the correlation of the contextual interaction semantics; the question-and-answer correlation model is obtained by training based on sample interaction information.

In the step 201, the second interaction information may include user instruction information and machine reply information, which is not specifically defined in the embodiments of the present disclosure. Before the step 202 is performed, a large amount of sample interaction information (i.e., question and answer information between the smart device and the user) may be collected in advance, the word vector of the sample interaction information may be extracted, and the word vector may be used as the input of the initial model, so as to obtain a binary or regression question-and-answer correlation model by training. Wherein, the modeling method of the model may be RNN or CNN, which is not specifically defined in the embodiments of the present disclosure. The interaction information in the interaction process before sleep can be obtained through pre-recording and voice recognition, which is not specifically defined in the embodiment of the present disclosure, either.

On the basis of the content of the foregoing embodiments, as an optional embodiment, an embodiment of the present disclosure provides a method for determining real-time wake-up network based on real-time wake-up word library. As shown in Fig. 3, the method includes: 301. using each keyword as a wake-up word, and acquiring a phoneme sequence or Markov state sequence corresponding to each wake-up word; and 302. connecting the phoneme sequences or Markov state sequences corresponding to each of the wake-up words to construct a real-time wake-up network.

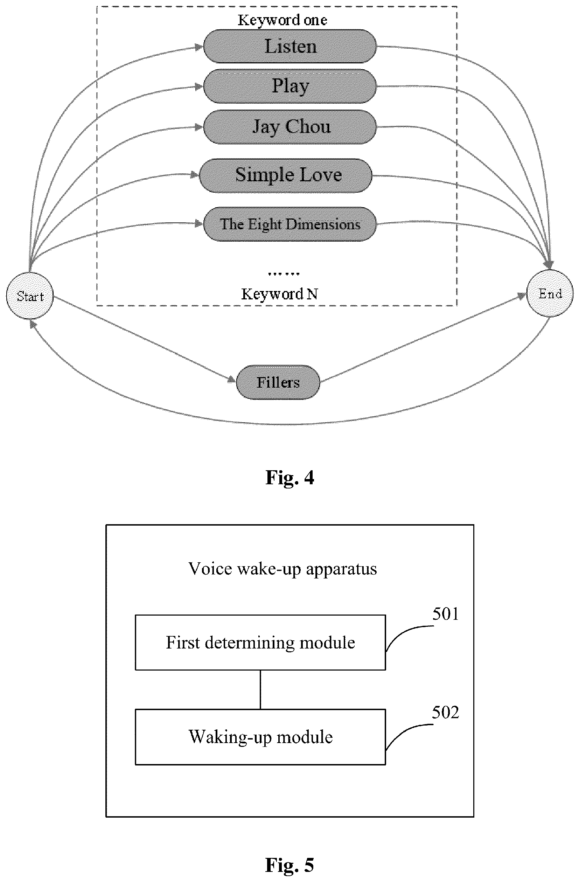

Specifically, the wake-up word may be mapped to a phoneme sequence or a Markov state sequence through a "text-phoneme" mapping list. Wherein, the granularity of the sequence may be consistent with the modeling granularity of the acoustic model configured to decode the acoustic features. Based on the above example, the structure of the real-time wake-up network may be as shown in Fig. 4.

Correspondingly, after the real-time wake-up network is constructed and taken effect, the voice signal can be recognized based on the real-time wake-up network, namely, the instructions that the user wants to execute can be determined. For instance, if the content of the voice signal is "listen to Simple Love", the smart device may be woken up through the real time wake-up network, and the instruction of "play Simple Love" is triggered. Since the keywords and the synonymously expanded keywords in the previous interaction process before sleep are stored in the real-time wake-up network, it is convenient to continue the previous interaction process before sleep without restarting a new interaction process.

It should be noted that the constructed wake-up word library is applicable to the previous interaction process before sleep. If the smart device sleeps again after the present wake-up, the real-time wake-up word library previously constructed is not necessarily applicable to wake-up again. Therefore, after the current round of interaction is completed, the automatically constructed real-time wake-up word library may be deleted, and in a next re-wake phase, and a new real-time wake-up word library may be regenerated according to the method provided in the embodiments of the present disclosure. Alternatively, if the user interaction state is to restart the interaction process, the previously added wake-up word is deleted, or the original wake-up word library is directly used as the real-time wake-up word library.

It should be noted that all the optional embodiments above can be combined in any manner to form an optional embodiment of the present disclosure, which will not be repeated here.

On the basis of the content of the foregoing embodiments, an embodiment of the present disclosure provides a voice wake-up apparatus configured to execute the voice wake-up method in the foregoing method embodiments. As shown in Fig. 5, the apparatus includes:

a first determining module 501, configured to determine a real-time wake-up word library based on a user interaction state, the real-time wake-up word library being configured to perform a next interaction process; and

a waking-up module 502, configured to acquire a voice signal input by a user, and perform wake-up based on the real-time wake-up word library and the voice signal.

As an optional embodiment, the first determining module 501 includes:

a first acquiring unit, configured to acquire the keywords in a first interaction information of the previous interaction process according to the keyword information rules when the user interaction state is to continue the previous interaction process before sleep, and add the keywords to an original wake-up word library to obtain the real-time wake-up word library; and

a second acquiring unit, configured to use an original wake-up word library as the real-time wake-up word library when the user interaction state is to restart the interaction process.

As an optional embodiment, the first acquiring unit is configured to acquire the keywords in the first interaction information of the previous interaction process according to part of speech and/or sentence components.

As an optional embodiment, the first interaction information includes any one of the following three types of information: user's instruction information, machine reply information, and query information.

As an optional embodiment, the apparatus further includes:

a second determining module, configured to determine the user interaction state based on the user state feature and/or the interaction logic feature, the user state feature being configured to represent a user state during interaction, and the interaction logic feature being configured to represent an interaction logic during interaction.

As an optional embodiment, the second determining module is configured to input the user state feature and/or the interaction logic feature to an interaction state prediction model, and output the user interaction state; or generalize the user state feature and the interaction logic feature, and determine the user interaction state according to a generalization result.

As an optional embodiment, the user state feature includes at least any one of the following five types of information: user response duration, user distance, the state of a user's body, the state of a user's face, and user identity; and

the interaction logic feature includes at least any one of the following two types of information: integrity of interaction logic and correlation of contextual interaction semantics.

As an optional embodiment, the apparatus further includes:

an acquiring module, configured to acquire a second interaction information of the previous interaction process, and extract a word vector of the interaction information; and

an output module, configured to input the word vector to a question-and-answer correlation model, and output the correlation of the contextual interaction semantics; the question-and-answer correlation model being obtained by training based on sample interaction information.

For the apparatus provided by the embodiments of the present disclosure, a real-time wake-up word library is determined based on a user interaction state, a voice signal input by the user is acquired, and wake-up is performed based on the real-time wake-up word library and the voice signal. After an interruption of the previous interaction process, wake-up is performed based on a real-time wake-up word library, thus, it may provide users with an unperceivable experience with respect to sleep when wake-up is re-performed, so that the user can directly continue the interaction scenarios prior to sleep, without repeating the interaction process that has been performed previously. Therefore, the interaction cost may be reduced and the user experience may be improved.

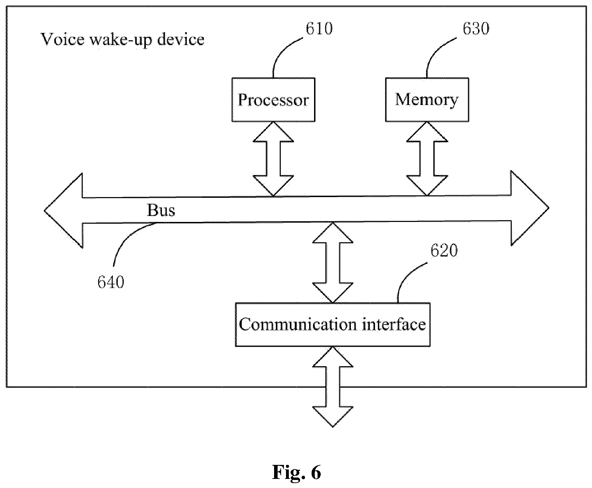

Fig. 6 illustrates a schematic diagram of the physical structure of a voice wake-up device. As shown in Fig. 6, the device may include: a processor 610, a communication interface 620, a memory 630, and a bus 640. Wherein, the processor 610, the communication interface 620, and the memory 630 communicate with each other through the bus 640. The communication interface 640 may be configured to perform information transmission between a server and a smart TV. The processor 610 may call the logic instructions in the memory 630 to execute the following methods: determining a real-time wake-up word library based on a user interaction state, the real-time wake-up word library being configured to perform a next interaction process; acquiring a voice signal input by a user, and performing wake-up based on the real-time wake-up word library and the voice signal.

In addition, the foregoing logical instructions in the memory 630 may be implemented in the form of software functional units and may be stored in a computer readable storage medium when sold or used as an independent product. Based on this understanding, the technical solutions of the present disclosure may be embodied in the form of software products, and the computer software products is stored in computer readable storage media and includes a number of instructions to make a computer device (which can be a personal computer, a server, or a dictionary device, etc.) execute all or part of the steps of the methods according to the various embodiments of the present disclosure. The aforementioned storage media include: U disk, mobile hard disk, ROM (Read-Only Memory), RAM (Random Access Memory), magnetic disc, compact disc and other media that can store program code.

An embodiment of the present disclosure provides a non-transitory computer-readable storage medium which stores computer instructions, and the computer instructions cause the computer to execute the voice wake-up method provided by the foregoing embodiments, for example, including: determining a real-time wake-up word library based on a user interaction state, the real-time wake-up word library being configured to perform a next interaction process; acquiring a voice signal input by a user, and performing wake-up based on the real-time wake-up word library and the voice signal.

It can be understood by those of ordinary skill in the art that all or part of the steps in the method embodiments above can be completed by hardware related to program instructions. The foregoing program can be stored in a computer readable storage medium, and when the program is executed, the steps including the method embodiments above are performed; the foregoing storage media include: ROM, RAM, magnetic disc, compact disc and other media that can store program codes.

The device embodiments described above are only schematic, wherein the units described as separate components may or may not be physically separated, and the components displayed as units may or may not be physical units, namely, they may be located in one place or, may be distributed to multiple word library units. Part or all of the modules may be selected according to actual needs to achieve the purpose of the solutions of the embodiments. It can be understood and implemented by a person of ordinary skill in the art without paying creative labor.

Through the description of the above embodiments, it can be clearly understood by those skilled in the art that each embodiment can be implemented by means of software plus a necessary general hardware platform, and of course, it can also be implemented by hardware. Based on this understanding, the technical solutions above can be embodied in the form of software products, and the computer software products can be stored in computer readable storage media, such as ROM/RAM, magnetic disc, compact disc. The software also includes a plurality of instructions to enable a computer device (may be a personal computer, server, or word library device, etc.) to execute the methods of various embodiments or some parts of the embodiments.

It should be noted that the embodiments are only for illustrating the technical solutions of the present disclosure, rather than limiting them; although the present disclosure has been described in detail with reference to the foregoing embodiments, those skilled in the art should understand that the technical solutions documented in the preceding embodiments may still be modified, or parts of the technical features thereof can be equivalently substituted; and such modifications or substitutions are possible within the scope of the appended claims.

## Claims

1.   A voice wake-up method for a device, **characterized by** comprising:

   determining a user interaction state (101) after a sleep state of the device is entered;
   acquiring keywords in a first interaction information of a previous interaction process performed before sleep according to keyword information rules, and adding the keywords to an original wake-up word library to obtain the real-time wake-up word library when the user interaction state is to continue said previous interaction process; and
   using the original wake-up word library as the real-time wake-up word library when the user interaction state (101) is to restart the interaction process, the real-time wake-up word library being configured to perform a next interaction process; and
   acquiring a voice signal (102) input by a user, and performing wake-up based on the real-time wake-up word library and the voice signal (102).

2.   The method of claim 1, **characterized in that**, the acquiring keywords in the first interaction information of the previous interaction process according to the keyword information rules comprises:
   acquiring keywords in the first interaction information of the previous interaction process according to part of speech and/or sentence composition.

3.   The method of claim 1 or 2, **characterized in that**, the first interaction information comprises any one of the following three types of information: user's instruction information, machine reply information, and query information.

4.   The method of claim 1, **characterized in that** the determining a user interaction state (101) comprises:
   determining the user interaction state (101) based on a user state feature and/or an interaction logic feature, the user state feature being configured to represent a user state during interaction, and the interaction logic feature being configured to represent an interaction logic during interaction.

5.   The method of claim 4, **characterized in that**, the determining the user interaction state (101) based on the user state feature and/or the interaction logic feature comprises:

   inputting the user state feature and/or the interaction logic feature to an interaction state prediction model, and outputting the user interaction state (101); or
   generalization the user state feature and the interaction logic feature, and determining the user interaction state (101) according to a generalization result.

6. The method of claim 4 or 5, **characterized in that**, the user state feature comprises at least any one of the following five types of information: user response duration, user distance, a state of user's body, a state of user's face, and user identity; and

the interaction logic feature comprises integrity of interaction logic and correlation of contextual interaction semantics,

the integrity of interaction logic indicating whether the user responds to the question asked by the device which is a smart device before the smart device enters sleep and being positively correlated to the degree of user response to the question;

the correlation of contextual interaction semantics indicating whether a response given by the user is related to the question asked by the smart device before the smart device goes to sleep.

7. A voice wake-up apparatus, comprising:

a second determining module, configured to determine a user interaction state (101) after a sleep state of the apparatus is entered;

a first determining module (501) comprising a first acquiring unit and a second acquiring unit, the first acquiring unit is configured to acquire keywords in a first interaction information of a previous interaction process performed before sleep according to keyword information rules, and add the keywords to an original wake-up word library to obtain the real-time wake-up word library when the user interaction state (101) is to continue said previous interaction process;

the second acquiring unit is configured to use the original wake-up word library as the real-time wake-up word library when the user interaction state (101) is to restart the interaction process; the real-time wake-up word library being configured to perform a next interaction process; and

a waking-up module (502), configured to acquire a voice signal (102) input by the user, and perform wake-up based on the real-time wake-up word library and the voice signal (102).

8. The apparatus of claim 7, **characterized in that**, the first acquiring unit is configured to acquire the keywords in the first interaction information of the previous interaction process according to part of speech and/or sentence components.

9. The apparatus of claim 7 or 8, **characterized in that**, the first interaction information comprises any one of the following three types of information: user's instruction information, machine reply information, and query information.

10. The apparatus of claim 7, **characterized in that** the second determining module is configured to:
determine the user interaction state (101) based on the user state feature and/or the interaction logic feature, the user state feature being configured to represent a user state during interaction, and the interaction logic feature being configured to represent an interaction logic during interaction.

11. The apparatus of claim 10, **characterized in that**, the second determining module is configured to input the user state feature and/or the interaction logic feature to an interaction state prediction model, and output the user interaction state (101); or generalize the user state feature and the interaction logic feature, and determine the user interaction state (101) according to a generalization result.

12. The apparatus of claim 10 or 11, **characterized in that**, the user state feature comprises at least any one of the following five types of information: user response time, user distance, a state of user's body, a state of user's face, and user identity; and the interaction logic feature comprises integrity of interaction logic and correlation of contextual interaction semantics,

the integrity of interaction logic indicating whether the user responds to the question asked by the apparatus which is a smart device before the smart device enters sleep and being positively correlated to the degree of user response to the question;

the correlation of contextual interaction semantics indicating whether a response given by the user is related to the question asked by the smart device before the smart device goes to sleep.

13. A voice wake-up apparatus, comprising:

at least one processor (610); and
at least one memory (630) communicatively connected with the processor (610), wherein:
the memory (630) stores program instructions that is executable by the processor (610), and the processor (610) performs the method according to any one of claims 1 to 6 by calling the program instructions.

**14.** A non-transitory computer readable storage medium, **characterized in that**, the non-transitory computer readable storage medium stores computer instructions which cause a computer to perform the method according to any one of claims 1 to 6.

**Patentansprüche**

**1.** Sprachaufwachverfahren für ein Gerät, **dadurch gekennzeichnet, dass** es Folgendes aufweist:

Bestimmen eines Benutzerinteraktionszustands (101), nachdem ein Schlafzustand des Geräts erreicht ist;
Erfassen von Schlüsselwörtern in einer ersten Interaktionsinformation eines vorhergehenden Interaktionsprozesses, der vor dem Schlaf gemäß Schlüsselwortinformationsregeln durchgeführt wurde, und Hinzufügen der Schlüsselwörter zu einer ursprünglichen Weckwortbibliothek, um die Echtzeit-Weckwortbibliothek zu erhalten, wenn der Benutzerinteraktionszustand die Fortsetzung des vorhergehenden Interaktionsprozesses ist; und
Verwenden der ursprünglichen Weckwortbibliothek als die Echtzeit-Weckwortbibliothek, wenn der Benutzerinteraktionszustand (101) der Neustart des Interaktionsprozesses ist, wobei die Echtzeit-Weckwortbibliothek so konfiguriert ist, dass sie einen nächsten Interaktionsprozess durchführt; und
Erfassen eines Sprachsignals (102), das von einem Benutzer eingegeben wird, und Durchführen des Aufweckens auf der Grundlage der Echtzeit-Weckwortbibliothek und des Sprachsignals (102).

**2.** Verfahren nach Anspruch 1, **dadurch gekennzeichnet, dass** das Erfassen von Schlüsselwörtern in der ersten Interaktionsinformation des vorhergehenden Interaktionsprozesses gemäß den Schlüsselwortinformationsregeln umfasst:
das Erfassen von Schlüsselwörtern in der ersten Interaktionsinformation des vorangegangenen Interaktionsprozesses entsprechend der Sprachpartie und/oder der Satzzusammensetzung.

**3.** Verfahren nach Anspruch 1 oder 2, **dadurch gekennzeichnet, dass** die erste Interaktionsinformation eine der folgenden drei Arten von Information umfasst: Benutzeranweisungsinformation, Maschinenantwortinformation und Abfrageinformation.

**4.** Verfahren nach Anspruch 1, **dadurch gekennzeichnet, dass** das Bestimmen eines Benutzerinteraktionszustandes (101) Folgendes aufweist:
Bestimmen des Benutzerinteraktionszustands (101) auf der Grundlage eines Benutzerzustandsmerkmals und/oder eines Interaktionslogikmerkmals, wobei das Benutzerzustandsmerkmal so konfiguriert ist, dass es einen Benutzerzustand während der Interaktion darstellt, und das Interaktionslogikmerkmal so konfiguriert ist, dass es eine Interaktionslogik während der Interaktion darstellt.

**5.** Verfahren nach Anspruch 4, **dadurch gekennzeichnet, dass** das Bestimmen des Benutzerinteraktionszustandes (101) auf der Grundlage des Benutzerzustandsmerkmals und/oder des Interaktionslogikmerkmals Folgendes aufweist:

Eingeben des Benutzerzustandsmerkmals und/oder des Interaktionslogikmerkmals in ein Interaktionszustandsvorhersagemodell und Ausgeben des Benutzerinteraktionszustands (101); oder
Generalisieren des Benutzerzustandsmerkmals und des Interaktionslogikmerkmals und Bestimmen des Benutzerinteraktionszustands (101) gemäß einem Generalisierungsergebnis.

**6.** Verfahren nach Anspruch 4 oder 5, **dadurch gekennzeichnet, dass** das Benutzerzustandsmerkmal mindestens einen der folgenden fünf Informationstypen aufweist: Benutzerantwortdauer, Benutzerentfernung, Zustand des Benutzerkörpers, Zustand des Benutzergesichts und Benutzeridentität; und

das Interaktionslogikmerkmal die Integrität der Interaktionslogik und die Korrelation der kontextuellen Interaktionssemantik aufweist,
wobei die Integrität der Interaktionslogik anzeigt, ob der Benutzer auf die von der Vorrichtung, die eine intelligente Vorrichtung ist, gestellte Frage antwortet, bevor die intelligente Vorrichtung in den Schlafzustand übergeht, und positiv mit dem Grad der Benutzerantwort auf die Frage korreliert ist;

wobei die Korrelation der kontextuellen Interaktionssemantik anzeigt, ob eine vom Benutzer gegebene Antwort mit der von der intelligenten Vorrichtung gestellten Frage zusammenhängt, bevor die intelligente Vorrichtung in den Schlafzustand übergeht.

7. Sprachaufwachvorrichtung, die Folgendes aufweist:

ein zweites Bestimmungsmodul, das konfiguriert ist, um einen Benutzerinteraktionszustand (101) zu bestimmen, nachdem ein Schlafzustand des Geräts eingetreten ist;

ein erstes Bestimmungsmodul (501), das eine erste Erfassungseinheit und eine zweite Erfassungseinheit umfasst, wobei die erste Erfassungseinheit so konfiguriert ist, dass sie Schlüsselwörter in einer ersten Interaktionsinformation eines vorherigen Interaktionsprozesses, der vor dem Schlafzustand durchgeführt wurde, gemäß Schlüsselwortinformationsregeln erfasst und die Schlüsselwörter zu einer ursprünglichen Weckwortbibliothek hinzufügt, um die Echtzeit-Weckwortbibliothek zu erhalten, wenn der Benutzerinteraktionszustand (101) den vorherigen Interaktionsprozess fortsetzen soll;

die zweite Erfassungseinheit so konfiguriert ist, dass sie die ursprüngliche Weckwortbibliothek als die Echtzeit-Weckwortbibliothek verwendet, wenn der Benutzerinteraktionszustand (101) der Neustart des Interaktionsprozesses ist; wobei die Echtzeit-Weckwortbibliothek so konfiguriert ist, dass sie einen nächsten Interaktionsprozess durchführt; und

ein Weckmodul (502), das so konfiguriert ist, dass es ein von dem Benutzer eingegebenes Sprachsignal (102) erfasst und ein Aufwachen auf der Grundlage der Echtzeit-Wachwortbibliothek und des Sprachsignals (102) durchführt.

8. Vorrichtung nach Anspruch 7, **dadurch gekennzeichnet, dass** die erste Erfassungseinheit so konfiguriert ist, dass sie die Schlüsselwörter in der ersten Interaktionsinformation des vorangegangenen Interaktionsprozesses entsprechend dem Sprachteil und/oder den Satzkomponenten erfasst.

9. Vorrichtung nach Anspruch 7 oder 8, **dadurch gekennzeichnet, dass** die erste Interaktionsinformation eine der folgenden drei Arten von Information aufweist: Benutzeranweisungsinformation, Maschinenantwortinformation und Abfrageinformation.

10. Vorrichtung nach Anspruch 7, **dadurch gekennzeichnet, dass** das zweite Bestimmungsmodul dazu konfiguriert ist: Bestimmen des Benutzerinteraktionszustands (101) auf der Grundlage des Benutzerzustandsmerkmals und/oder des Interaktionslogikmerkmals, wobei das Benutzerzustandsmerkmal konfiguriert ist, um einen Benutzerzustand während der Interaktion darzustellen, und das Interaktionslogikmerkmal dazu konfiguriert ist, eine Interaktionslogik während der Interaktion darzustellen.

11. Vorrichtung nach Anspruch 10, **dadurch gekennzeichnet, dass** das zweite Bestimmungsmodul so konfiguriert ist, dass es das Benutzerzustandsmerkmal und/oder das Interaktionslogikmerkmal in ein Interaktionszustandsvorhersagemodell eingibt und den Benutzerinteraktionszustand (101) ausgibt; oder das Benutzerzustandsmerkmal und das Interaktionslogikmerkmal verallgemeinert und den Benutzerinteraktionszustand (101) gemäß einem Verallgemeinerungsergebnis bestimmt.

12. Vorrichtung nach Anspruch 10 oder 11, **dadurch gekennzeichnet, dass** das Benutzerzustandsmerkmal mindestens einen der folgenden fünf Informationstypen aufweist: Benutzerreaktionszeit, Benutzerentfernung, Zustand des Körpers des Benutzers, Zustand des Gesichts des Benutzers und Benutzeridentität; und

das Interaktionslogikmerkmal die Integrität der Interaktionslogik und die Korrelation der kontextbezogenen Interaktionssemantik aufweist,

wobei die Integrität der Interaktionslogik anzeigt, ob der Benutzer auf die von der Vorrichtung, die eine intelligente Vorrichtung ist, gestellte Frage antwortet, bevor die intelligente Vorrichtung in den Schlafzustand übergeht, und positiv mit dem Grad der Benutzerantwort auf die Frage korreliert ist;

wobei die Korrelation der kontextuellen Interaktionssemantik anzeigt, ob eine vom Benutzer gegebene Antwort mit der von der intelligenten Vorrichtung gestellten Frage zusammenhängt, bevor die intelligente Vorrichtung in den Schlafzustand übergeht.

13. Sprachaufwachvorrichtung, die Folgendes aufweist:

mindestens einen Prozessor (610); und
mindestens einen Speicher (630), der kommunikativ mit dem Prozessor (610) verbunden ist, wobei:
der Speicher (630) Programmanweisungen speichert, die von dem Prozessor (610) ausführbar sind, und der
Prozessor (610) das Verfahren nach einem der Ansprüche 1 bis 6 durch Aufrufen der Programmanweisungen
ausführt.

14. Nicht-flüchtiges computerlesbares Speichermedium, **dadurch gekennzeichnet, dass** das nicht-flüchtige computerlesbare Speichermedium Computerbefehle speichert, die einen Computer veranlassen, das Verfahren nach einem der Ansprüche 1 bis 6 durchzuführen.


**Revendications**

1. Procédé de réveil vocal pour un dispositif, **caractérisé en ce qu'**il comprend les étapes consistant à :

   déterminer un état d'interaction d'utilisateur (101) après l'entrée du dispositif dans un état de veille ; acquérir
   des mots-clés dans des premières informations d'interaction d'un processus d'interaction précédent effectué
   avant la veille selon des règles d'information de mots-clés, et ajouter les mots-clés à une bibliothèque de mots
   de réveil d'origine pour obtenir la bibliothèque de mots de réveil en temps réel lorsque l'état d'interaction d'utilisateur doit continuer ledit processus d'interaction précédent ; et
   utiliser la bibliothèque de mots de réveil d'origine comme bibliothèque de mots de réveil en temps réel lorsque
   l'état d'interaction d'utilisateur (101) doit redémarrer le processus d'interaction, la bibliothèque de mots de réveil
   en temps réel étant configurée pour effectuer un processus d'interaction suivant ; et acquérir un signal vocal
   (102) entré par un utilisateur, et effectuer un réveil sur la base de la bibliothèque de mots de réveil en temps
   réel et du signal vocal (102).

2. Procédé selon la revendication 1, **caractérisé en ce que** l'acquisition de mots-clés dans les premières informations
   d'interaction du processus d'interaction précédent selon les règles d'informations de mots-clés comprend l'étape
   consistant à :
   acquérir des mots-clés dans les premières informations d'interaction du processus d'interaction précédent en fonction d'une partie de la composition de parole et/ou de phrase.

3. Procédé selon la revendication 1 ou 2, **caractérisé en ce que** les premières informations d'interaction comprennent
   l'un quelconque des trois types d'informations suivants : des informations d'instruction d'utilisateur, des informations
   de réponse de machine et des informations d'interrogation.

4. Procédé selon la revendication 1, **caractérisé en ce que** la détermination d'un état d'interaction d'utilisateur (101)
   comprend l'étape consistant à :
   déterminer l'état d'interaction d'utilisateur (101) sur la base d'une caractéristique d'état d'utilisateur et/ou d'une
   caractéristique de logique d'interaction, la caractéristique d'état d'utilisateur étant configurée pour représenter un
   état d'utilisateur pendant l'interaction, et la caractéristique de logique d'interaction étant configurée pour représenter
   une logique d'interaction pendant une interaction.

5. Procédé selon la revendication 4, **caractérisé en ce que** la détermination de l'état d'interaction d'utilisateur (101)
   sur la base de la caractéristique d'état d'utilisateur et/ou de la caractéristique de logique d'interaction comprend les
   étapes consistant à :

   entrer la fonction d'état d'utilisateur et/ou la fonction de logique d'interaction dans un modèle de prédiction d'état
   d'interaction, et délivrer en sortie l'état d'interaction d'utilisateur (101) ; ou
   généraliser la caractéristique d'état d'utilisateur et la caractéristique de logique d'interaction, et déterminer l'état
   d'interaction d'utilisateur (101) en fonction d'un résultat de généralisation.

6. Procédé selon la revendication 4 ou 5, **caractérisé en ce que** la caractéristique d'état d'utilisateur comprend au
   moins l'un quelconque des cinq types d'informations suivants : la durée de réponse d'utilisateur, la distance d'utilisateur, un état du corps de l'utilisateur, un état du visage de l'utilisateur et l'identité de l'utilisateur ; et

   la caractéristique de logique d'interaction comprend l'intégrité de la logique d'interaction et la corrélation de la
   sémantique d'interaction contextuelle,

l'intégrité de la logique d'interaction indiquant si l'utilisateur répond à la question posée par le dispositif qui est un dispositif intelligent avant que le dispositif intelligent ne soit mis en veille et étant positivement corrélée au degré de réponse d'utilisateur à la question ;

la corrélation de la sémantique d'interaction contextuelle indiquant si une réponse donnée par l'utilisateur est liée à la question posée par le dispositif intelligent avant que le dispositif intelligent ne se mette en veille.

7. Appareil de réveil vocal, comprenant :

un second module de détermination, configuré pour déterminer un état d'interaction d'utilisateur (101) après l'entrée de l'appareil dans un état de veille ;

un premier module de détermination (501) comprenant une première unité d'acquisition et une seconde unité d'acquisition, la première unité d'acquisition étant configurée pour acquérir des mots-clés dans des premières informations d'interaction d'un processus d'interaction précédent effectué avant la veille selon des règles d'information de mots-clés, et ajouter les mots-clés à une bibliothèque de mots de réveil d'origine pour obtenir la bibliothèque de mots de réveil en temps réel lorsque l'état d'interaction d'utilisateur (101) doit continuer ledit processus d'interaction précédent ;

la seconde unité d'acquisition est configurée pour utiliser la bibliothèque de mots de réveil d'origine en tant que bibliothèque de mots de réveil en temps réel lorsque l'état d'interaction d'utilisateur (101) doit redémarrer le processus d'interaction ; la bibliothèque de mots de réveil en temps réel étant configurée pour effectuer un processus d'interaction suivant ; et

un module de réveil (502), configuré pour acquérir un signal vocal (102) entré par l'utilisateur, et effectuer un réveil sur la base de la bibliothèque de mots de réveil en temps réel et du signal vocal (102).

8. Appareil selon la revendication 7, **caractérisé en ce que** la première unité d'acquisition est configurée pour acquérir les mots-clés dans les premières informations d'interaction du processus d'interaction précédent selon une partie des composantes de parole et/ou de phrase.

9. Appareil selon la revendication 7 ou 8, **caractérisé en ce que** les premières informations d'interaction comprennent l'un quelconque des trois types d'informations suivants : des informations d'instruction d'utilisateur, des informations de réponse de machine et des informations d'interrogation.

10. Appareil selon la revendication 7, **caractérisé en ce que** le second module de détermination est configuré pour : déterminer l'état d'interaction d'utilisateur (101) sur la base d'une caractéristique de l'état d'utilisateur et/ou de la caractéristique de logique d'interaction, la caractéristique d'état d'utilisateur étant configurée pour représenter un état d'utilisateur pendant l'interaction, et la caractéristique de logique d'interaction étant configurée pour représenter une logique d'interaction pendant une interaction.

11. Appareil selon la revendication 10, **caractérisé en ce que** le second module de détermination est configuré pour entrer la caractéristique d'état d'utilisateur et/ou la caractéristique de logique d'interaction dans un modèle de prédiction d'état d'interaction, et délivrer en sortie l'état d'interaction d'utilisateur (101) ; ou généraliser la caractéristique d'état d'utilisateur et la caractéristique de logique d'interaction, et déterminer l'état d'interaction d'utilisateur (101) en fonction d'un résultat de généralisation.

12. Appareil selon la revendication 10 ou 11, **caractérisé en ce que** la caractéristique d'état d'utilisateur comprend au moins l'un quelconque des cinq types d'informations suivants : le temps de réponse d'utilisateur, la distance d'utilisateur, un état du corps de l'utilisateur, un état du visage de l'utilisateur et l'identité de l'utilisateur ; et

la caractéristique de logique d'interaction comprend l'intégrité de la logique d'interaction et la corrélation de la sémantique d'interaction contextuelle,

l'intégrité de la logique d'interaction indiquant si l'utilisateur répond à la question posée par l'appareil qui est un dispositif intelligent avant que le dispositif intelligent ne soit mis en veille et étant positivement corrélée au degré de réponse d'utilisateur à la question ;

la corrélation de la sémantique d'interaction contextuelle indiquant si une réponse donnée par l'utilisateur est liée à la question posée par le dispositif intelligent avant que le dispositif intelligent ne se mette en veille.

13. Appareil de réveil vocal, comprenant :

au moins un processeur (610) ; et

au moins une mémoire (630) connectée en communication avec le processeur (610), dans lequel :
la mémoire (630) stocke des instructions de programme qui sont exécutables par le processeur (610), et le processeur (610) exécute le procédé selon l'une quelconque des revendications 1 à 6 en appelant les instructions de programme.

14. Support de stockage lisible par ordinateur non transitoire, **caractérisé en ce que** le support de stockage lisible par ordinateur non transitoire stocke des instructions informatiques qui amènent un ordinateur à mettre en œuvre le procédé selon l'une quelconque des revendications 1 à 6.

Determining a real-time wake-up word library based on a user interaction state, the real-time wake-up word library being configured to perform a next interaction process

101

Acquiring a voice signal input by a user, and performing wake-up based on the real-time wake-up word library and the voice signal

102

**Fig. 1**

Acquiring a second interaction information of the previous interaction process, and extracting a word vector of the interaction information

201

Inputting the word vector to a question-and-answer correlation model, and outputting the correlation of the contextual interaction semantics; the question-and-answer correlation model is obtained by training based on sample interaction information

202

**Fig. 2**

Using each keyword as a wake-up word, and acquiring a phoneme sequence or Markov state sequence corresponding to each wake-up word

301

Connecting the phoneme sequences or Markov state sequences corresponding to each of the wake-up words to construct a real-time wake-up network

302

**Fig. 3**

Keyword one

Listen

Play

Jay Chou

Simple Love

The Eight Dimensions

... ...

Keyword N

Start

End

Fillers

**Fig. 4**

Voice wake-up apparatus

First determining module  501

Waking-up module  502

**Fig. 5**

Fig. 6

**EP 3 779 972 B1**

**REFERENCES CITED IN THE DESCRIPTION**

**Patent documents cited in the description**

- CN 2018102988451
- EP 3092555 A1
- WO 2015106134 A1
- WO 2015084425 A1